# EUROPEAN PATENT APPLICATION

(11) **EP 3 911 045 A1**
(43) Date of publication of application: **17.11.2021**
(21) Application number: 19909402.0
(22) Date of filing: 09.01.2019
(51) Int. Cl.: H04W 56/00, H04W 72/04

(54) **TERMINAL AND COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); UCHINO, Tooru, Tokyo 100-6150 (JP); TAKAHASHI, Hideaki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2019/000411
(87) International publication number: WO 2020/144783

(57) **Abstract**

A terminal includes: a control section that identifies one or more cells among a plurality of candidate cells where reference information on reference time is receivable; and a reception section that receives the reference information in the identified cells.

## Description

### Technical Field

The present disclosure relates to a terminal and a communication method.

### Background Art

Long Term Evolution (LTE) has been specified to further achieve a higher data rate, lower latency, and the like in a Universal Mobile Telecommunications System (UMTS) network. Future systems of LTE have also been studied to further achieve a broader bandwidth and a higher speed from LTE. Examples of the future systems of LTE include systems called LTE-Advanced (LTE-A), Future Radio Access (FRA), 5th generation mobile communication system (5G), 5G plus (5G+), Radio Access Technology (New-RAT) New Radio (NR), and the like.

In radio communication systems such as 5G and the like, support for a very high accuracy of synchronization (also referred to as synchronicity, time synchronization, or clock synchronization, for example) such as in the order of 1 µs between devices has been studied (see, for example, Non-Patent Literature (hereinafter referred to as "NPL") 1).

### Citation List

### Non-Patent Literature

NPL 1 3GPP TR 22.804 v16.1.0, "Study on Communication for Automation in Vertical Domains (Release 16)," September 2018

### Summary of Invention

### Technical Problem

However, a method for easily securing synchronization between devices has not been studied enough.

One object of the present disclosure is to easily secure synchronization between devices.

### Solution to Problem

A terminal according to one aspect of the present disclosure includes: a control section that identifies one or more cells among a plurality of candidate cells where reference information on reference time is receivable; and a reception section that receives the reference information in the identified cells.

### Advantageous Effects of Invention

According to the present disclosure, it is possible to easily secure synchronization between devices.

### Brief Description of Drawings

FIG. 1 illustrates an exemplary configuration of a radio communication system according to an embodiment;
FIG. 2 illustrates exemplary adjustment processing of synchronization;
FIG. 3 is a block diagram illustrating an exemplary configuration of a base station according to an embodiment;
FIG. 4 is a block diagram illustrating an exemplary configuration of a terminal according to an embodiment;
FIG. 5 illustrates an exemplary configuration of cells according to an embodiment; and
FIG. 6 illustrates an exemplary hardware configuration of the base station and the terminal according to an embodiment.

### Description of Embodiment

Hereinafter, an embodiment according to one aspect of the present disclosure will be described with reference to the accompanying drawings.

Application of 5G systems to various use cases is contemplated. The use cases include industrial systems including motion controllers, sensors, or actuators (also referred to as time sensitive networking (TSN), for example), live performances, smart grids, or local conference systems. These use cases may require stricter requirements than those for existing systems with regard to a synchronization accuracy between devices (also referred to as User Equipments (UEs), terminals, nodes, or entities, for example).

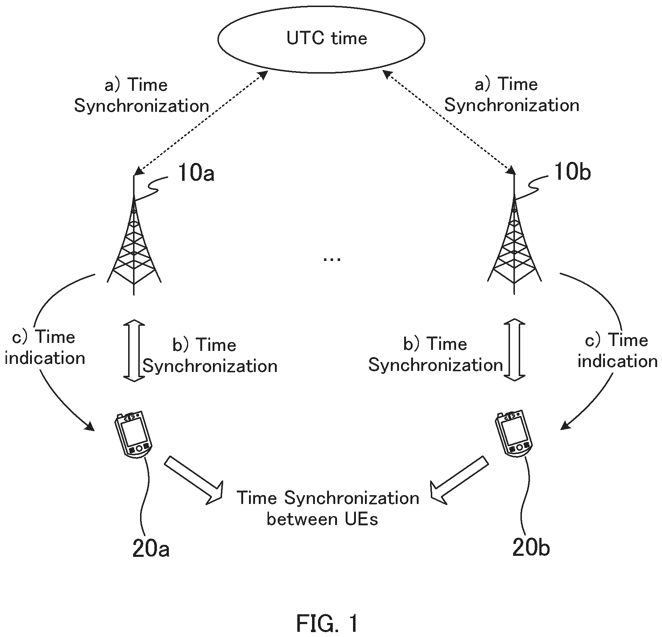

FIG. 1 illustrates an exemplary configuration of a radio communication system according to an embodiment of the present disclosure.

As illustrated in FIG. 1, the radio communication system includes base stations (also referred to as gNodeBs (gNBs) or eNodeBs (eNBs), for example) 10a and 10b, and terminals (also referred to as UEs, for example) 20a and 20b. For example, terminal 20a is connected by radio to base station 10a (radio access). For example, terminal 20b is connected by radio to base station 10b (radio access).

Note that the number of base stations and the number of terminals are not limited to two, and may also be one, or three or more. In addition, configurations of base station 10 and terminal 20 to be described later are examples of the functions related to the present embodiment. Base station 10 and terminal 20 may have functions that are not illustrated. Further, functional divisions or names of functional sections are not limited as long as the functions are for performing operations according to the present embodiment.

As illustrated in FIG. 1, operations for establishing synchronization between terminal 20a and terminal 20b include the following Operation a, Operation b, and Operation c, for example.

### (Operation a)

Base station 10a and base station 10b acquire time information indicating reference time from, for example, a server (not illustrated), and are synchronized to the reference time. Note that FIG. 1 illustrates a case where Universal Time Coordinated (UTC) is used as an example of the reference time. The reference time, however, is not limited to UTC and may also be a Global Positioning System (GPS) time or a local time. Note that UTC may be regarded as the same as Greenwich Mean Time (GMT).

### (Operation b)

Base station 10a and terminal 20a, for example, are synchronized with each other based on the reference time to which base station 10a is synchronized. Similarly, base station 10b and terminal 20b, for example, are synchronized with each other based on the reference time to which base station 10b is synchronized.

### (Operation c)

A propagation path between base station 10a and terminal 20a and a propagation path between base station 10b and terminal 20b may be different from each other. A difference existing between the propagation paths between the terminals and the base stations may cause, for example, a difference in reception timing (in other words, a propagation delay) for the information on the reference time at each of the terminals. This may cause deterioration of the synchronization accuracy between the terminals. Here, for example, terminal 20a and terminal 20b perform adjustment (or correction) of the synchronization using adjustment information (e.g., a Timing Advance (TA) command to be described later) on the time to be respectively notified (e.g., indicated) from base station 10a and base station 10b.

Each of terminal 20a and terminal 20b is synchronized to the reference time (UTC, for example) by the operations described above. Terminal 20a and terminal 20b are synchronized to the reference time, thereby establishing the synchronization between terminal 20a and terminal 20b.

Next, a method for adjusting the synchronization between devices (e.g., Operation c) illustrated in FIG. 1 will be described.

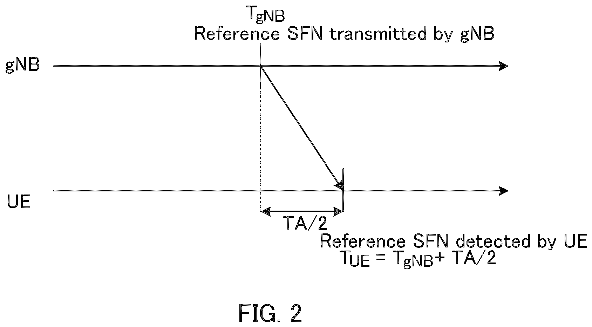

FIG. 2 illustrates exemplary adjustment processing of synchronization between a gNB (e.g., base station 10a or base station 10b in FIG. 1) and a UE (e.g., terminal 20a or terminal 20b in FIG. 1).

As illustrated in FIG. 2, the gNB notifies (transmits or delivers, in other words) the UE of, for example, information on the reference time (hereinafter, referred to as "timing reference information"). This notification corresponds to Operation b in FIG. 1, for example. Note that the information on the reference time may be associated with other terms such as time reference information.

The timing reference information includes, for example, the reference time acquired by the gNB (hereinafter, referred to as "T_{gNB}"). The timing reference information may also include, for example, information indicating which frame timing (e.g., System Frame Number (SFN)) the reference time T_{gNB} corresponds to (referred to as, for example, reference SFN). The time "T_{gNB}," for example, may indicate time on the ending boundary of the frame indicated by the reference SFN. Note that the timing reference information may include information other than T_{gNB} and the reference SFN.

Further, the timing reference information is notified, for example, from the gNB to the UE. For example, system information (e.g., System Information Block (SIB)), which is an example of broadcast information, or higher layer signaling (also referred to as a higher layer parameter or Radio Resource Control (RRC) signaling) is used for the notification from the gNB to the UE. The system information used for the notification of the timing reference information includes, for example, SIB9 in a 5G (NR) system or SIB 16 in an LTE system. Additionally, RRC signaling dedicated to each UE (e.g., dedicated RRC signaling or unicast RRC signaling) may be used for the notification of the timing reference information. Further, a channel individually configured for a UE (e.g., uni-cast Physical Downlink Shared Channel (PDSCH)) or a channel configured for a plurality of UEs (e.g., multi-cast PDSCH) may also be used for the notification of the timing reference information.

As illustrated in FIG. 2, the gNB notifies (transmits or delivers, in other words) the UE of adjustment information (e.g., a TA command (TAC)) indicating an adjustment value for adjusting communication timing based on the reference time. The TA command is, for example, an adjustment value for the gNB to synchronously receive signals to be transmitted from a plurality of UEs whose propagation paths or distances may be different from each other. For example, a value of twice the time corresponding to the propagation path for a signal to reach the UE from the gNB is configured as a cumulative value of the TA command. In other words, the half of the cumulative value of the TA command indicates a propagation delay time to be added corresponding to the propagation path between the gNB and the UE.

Note that the TA command may be information indicating the time itself corresponding to the propagation delay, or may also be information (such as an index) for calculating the time corresponding to the propagation delay.

Further, the TA command is notified using a Random Access Response (RAR) (also referred to as message 2), for example, in Random Access (RA) processing. Meanwhile, the TA command is notified, for example, using a Media Access Control Control Element (MAC CE) in cases other than the RA processing.

The gNB, for example, generates the TA command for each UE and transmits each TA command to the corresponding UE. After receiving the TA command (referred to as "TA" for example), the UE calculates a timing adjustment value (e.g., TA/2 in FIG. 2) based on the TA command. Then, the UE can adjust the time T_{gNB} included in the timing reference information and calculate the time T_{UE} (= T_{gNB} + TA/2) using the calculated timing adjustment value or the cumulative value thereof. In addition, in a case other than the RA processing, for example, the UE can update the timing adjustment value (i.e., the cumulative value of the TA command) each time the TA command is notified, using the new TA command. This update allows the UE in FIG. 2 to be synchronized to the reference time notified from the gNB following change in a communication environment of the UE, for example.

The combination of base station 10a and terminal 20a and the combination of base station 20b and terminal 20b each perform similar synchronization processing as the gNB and the UE do in FIG. 2. This allows terminal 20a and terminal 20b to be synchronized to the reference time, and terminal 20a and terminal 20b are synchronized with each other as a result.

Here, in 3rd Generation Partnership Project (3GPP), introducing of technologies such as Carrier Aggregation (CA) and Duel Connectivity (DC) has been studied.

DC is a technology that allows one terminal 20 to connect by radio to a plurality of base stations 10.

CA is a system that allows to transmit and receive signals using a plurality of Component Carriers (CCs).

Note that hereinafter, DC and CA may be collectively referred to as CA/DC.

For example, the introduction of DC allows terminal 20a or terminal 20b illustrated in FIG. 1 to connect by radio to both base station 10a and base station 10b.

DC where one of base station 10a and base station 10b is a gNB of NR and the other is an eNB of LTE may be referred to as EN-DC or NE-DC, for example. In EN-DC, a master node may be an eNB of LTE, and in NE-DC, a master node may be a gNB of NR Further, synchronization between an eNB of LTE and a gNB of NR may be established or may not be established.

In addition, CA/DC where both base station 10a and base station 10b are gNBs of NR may be referred to as NR-NR CA/DC or NN-DC.

In EN-DC or NR-NR CA/DC, the following situations (1) to (4) exist according to a difference of a configuration of a carrier.
(1) CA/DC using adjacent CCs in the same band (intra-band continuous CA/DC)
(2) CA/DC using CCs not adjacent to each other in the same band (intra-band non-continuous CA/DC)
(3) CA/DC using CCs not adjacent to each other between different bands (inter-band non-continuous CA/DC)
(4) A plurality of Timing Advance groups (Multiple TA groups)

Between a plurality of CCs used in CA, the synchronization may not be established or the synchronization accuracy may fail to meet a predetermined requirement (e.g., a stricter requirement than that for existing systems with regard to the synchronization accuracy)

For example, a requirement for time synchronization between CCs is specified to be 3 µs in CA using CCs not adjacent to each other between different bands or in the same band.

In a non-co-located configuration, for example, terminal 20 can address a delay spread of up to 30.26 µs in CA using CCs not adjacent to each other between different bands or in the same band. The non-co-located configuration is a configuration in which a plurality of CCs are transmitted and received from each of transmission/reception points located different from each other (for example, one is at a base station and the other is at a Remote Radio Head (RRH) connected to the base station).

Further, synchronization may not be established between Cell Groups (CGs) with regard to EN-DC, NE-DC, and NN-DC. In this case, for example, a Mater Cell Group (MCG) that is a CG subordinate to a master node and a Secondary Cell Group (SCG) may not be aware of time each other.

As described above, a system where CA/DC is applied may cause a case where an acceptable time gap occurs between a plurality of CCs or a plurality of CGs, or a case where the synchronization is not established in the first place. Thus, the synchronization accuracy may deteriorate according to the CC or the cell to use for acquiring timing reference information, for example, in use cases where the requirement of the synchronization accuracy is strict than that for the existing systems.

Therefore, the present disclosure describes configurations with regard to acquisition (reception) of the information on the reference time (e.g., timing reference information) to be used in order for terminal 20 to establish the synchronization in the system where CA/DC is applied.

### <Configurations of Base Station and Terminal>

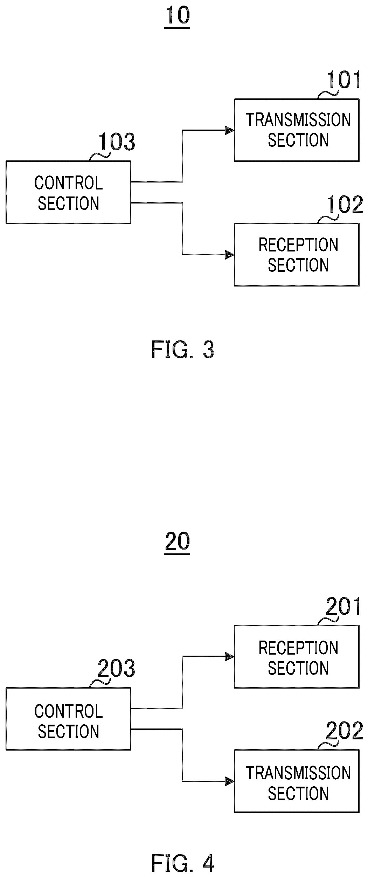

FIG. 3 is a block diagram illustrating an exemplary configuration of base station 10 (e.g., base station 10a or base station 10b illustrated in FIG. 1) according to the present embodiment. Base station 10 includes, for example, transmission section 101, reception section 102, and control section 103. Base station 10 may correspond to, for example, a node covering one or more cells.

Transmission section 101 transmits a signal (downlink signal) for terminal 20 to terminal 20. Transmission section 101, for example, transmits the downlink signal under the control of control section 103.

The downlink signal may include, for example, system information including timing reference information (e.g., SIB9), higher layer signaling including timing reference information, an RA message (e.g., RAR) including a TA command, or a MAC CE including a TA command.

Reception section 102 receives a signal (an uplink signal) transmitted from terminal 20. Reception section 102, for example, receives the uplink signal under the control of control section 103. The uplink signal includes, for example, an RA preamble, a Measurement Report (MR) indicating a measurement result of communication quality at terminal 20, channel quality information, a signal of a control channel, a signal of a data channel, a reference signal, or the like. Note that the channel quality information is, for example, Channel Quality Information (CQI). The control channel is, for example, a Physical Uplink Control Channel (PUCCH), and the data channel is, for example, a Physical Uplink Shared Channel (PUSCH). Additionally, the reference signal is, for example, a Sounding Reference Signal (SRS).

Control section 103 controls transmission processing in transmission section 101 and reception processing in reception section 102. Control section 103 controls, for example, transmission processing (notification processing) of timing reference information in transmission section 101 (e.g., a configuration of a cell and/or a carrier for notification of timing reference information and a configuration of a notification method of timing reference information).

FIG. 4 is a block diagram illustrating an exemplary configuration of terminal 20 (e.g., terminal 20a or terminal 20b illustrated in FIG. 1) according to the present embodiment. Terminal 20 includes, for example, reception section 201, transmission section 202, and control section 203.

Reception section 201 receives a downlink signal transmitted from base station 10. Reception section 201, for example, receives the downlink signal under the control of control section 203. Note that reception section 201, for example, may directly receive a signal transmitted from another terminal 20 (not illustrated) without via base station 10.

Transmission section 202 transmits an uplink signal to base station 10. Transmission section 202, for example, transmits the uplink signal under the control of control section 203. Note that transmission section 202, for example, may directly transmit a signal for another terminal 20 (not illustrated) without via base station 10.

Control section 203 controls reception processing in reception section 201 and transmission processing in transmission section 202. Control section 203, for example, identifies a cell for reception of timing reference information, and controls acquisition of the timing reference information and a TA command notified from the cell. Control section 203 then synchronizes communication timing with the reference time using the timing reference information and the TA command.

Next, a configuration of a cell from which terminal 20 acquires timing reference information in a system where CA/DC is applied will be described with examples.

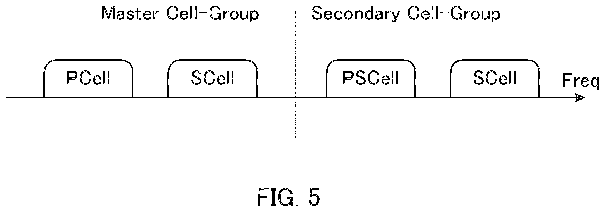

FIG. 5 illustrates an exemplary configuration of cells according to the present embodiment. FIG. 5 illustrates an example of configuring two cell groups: a master cell group and a secondary cell group. The master cell group includes two serving cells of a Primary Cell (PCell) and a Secondary Cell (SCell). The secondary cell group includes two serving cells of a Primary SCell (PSCell) and a SCell. Note that hereinafter, the serving cell may be referred to as a "cell."

Note that the cells and the cell groups illustrated in FIG. 5 are examples and the present disclosure is not limited thereto. For example, the number of cell groups may be three or more. In addition, the number of cells included in one cell group may be one, or three or more. One cell group may also include two or more SCells. Further, the terms "master cell group" and "secondary cell group" are examples and the present disclosure is not limited thereto. For example, the terms "master cell group" and "secondary cell group" may be replaced with other terms. The terms "PCell," "SCell," and "PSCell" are also examples and the present disclosure is not limited thereto. For example, the terms "PCell," "SCell," and "PSCell" may be replaced with other terms.

Terminal 20 can communicate via, for example, the four cells illustrated in FIG. 5 in the system where CA/DC is applied. Hereinafter, configurations, where terminal 20 acquires information on synchronization (e.g., timing reference information) with respect to the cells as illustrated in FIG. 5, will be described with examples.

### <Example 1>

Terminal 20 acquires (receives) timing reference information transmitted from any of the PCell, PSCell, and SCell. For example, terminal 20 may have a configuration that enables to acquire the timing reference information transmitted from only the PCell, or any of the PSCell or SCell. This configuration is implemented by, for example, either one of the following two methods.

### <Method 1 for Example 1>

For example, a set of cells from which terminal 20 acquires timing reference information is configured to terminal 20. When the set of cells is configured, terminal 20 may choose from which cell to acquire the timing reference information. In other words, terminal 20 can acquire the timing reference information from any cell in the set of cells. Terminal 20, for example, may determine a cell to acquire the timing reference information from the set of cells that has been configured.

Referring to FIG. 5, when a set of the PCell and the SCell in the MCG is configured to terminal 20, for example, terminal 20 may determine a serving cell to acquire the timing reference information from the PCell and the SCell in the MCG.

Further, terminal 20 does not have to switch the cell to acquire the timing reference information if not necessary because the switch of the cell would cause terminal 20 to be affected by a gap of time synchronization between the cells. The case where the switch is not necessary includes, for example, a case where base station 10 does not require terminal 20 to switch the cell to acquire the timing reference information.

### <Method 2 for Example 1>

A specific cell for terminal 20 to acquire timing reference information may be configured to terminal 20. When the specific cell is configured, terminal 20 may acquire the timing reference information transmitted from the specific cell. The specific cell configured to terminal 20 corresponds to a cell that provides the timing reference information.

Referring to FIG. 5, when the PCell in the MCG is configured to terminal 20, for example, terminal 20 acquires the timing reference information from the PCell in the MCG.

When the specific cell configured is the PCell, for example, the timing reference information may be included in a system information block in NR (e.g., SIB9) or a system information block in LTE (e.g., SIB16).

When the specific cell configured is the SCell, for example, the timing reference information may be included in a system information block in NR (e.g., SIB9) or a system information block in LTE (e.g., SIB 16). Alternatively, when the specific cell configured is the SCell, the timing reference information may be transmitted to terminal 20 using a channel (e.g., multi-cast PDSCH) used for signal transmission to a group of specific terminals 20 or a channel (e.g., uni-cast PDSCH) used for signal transmission to one terminal 20.

In the case where the specific cell configured is the SCell, for example, when terminal 20 acquires the system information block in NR (e.g., SIB9) in the PCell, terminal 20 may discard or ignore the acquired information on time synchronization in SIB9 in NR

Note that although the examples in which terminal 20 acquires the time reference information from one cell have been described above, the present disclosure is not limited thereto.

### <Example 2>

Terminal 20 has a configuration of acquiring timing reference information transmitted from two or more cells. This configuration is implemented by the following method, for example.

### <Method for Example 2>

For example, terminal 20 has a configuration of acquiring timing reference information from two or more cells. For example, two or more cells for terminal 20 to acquire timing reference information are configured to terminal 20.

Under this configuration, terminal 20 may choose from which cells to acquire the timing reference information. Terminal 20, for example, may determine two or more cells to acquire the timing reference information from a set of cells that has been configured.

Further, terminal 20 does not have to switch the serving cells to acquire the timing reference information if not necessary. The case where the switch is not necessary includes, for example, a case where base station 10 does not require terminal 20 to switch the cells to acquire the timing reference information.

Alternatively, a specific set of cells for terminal 20 to acquire the timing reference information may be configured to terminal 20.

When the specific set of cells includes a PCell, the timing reference information may be included in a system information block in NR (e.g., SIB9).

When the specific set of cells does not include a PCell, the timing reference information may be included in a system information block in NR (e.g., SIB9). Alternatively, when the specific set of cells does not include a PCell, the timing reference information may be transmitted to terminal 20 using a multicast channel (e.g., multi-cast PDSCH) or a unicast channel (e.g., uni-cast PDSCH).

In the case where the specific set of cells does not include the PCell, for example, when terminal 20 acquires SIB9 in NR in the PCell, terminal 20 may discard the acquired SIB9 in NR.

Note that terminal 20 may notify base station 10 (e.g., gNB) of the number of cells that can be used for acquiring the timing reference information with regard to Example 1 and Example 2 described above. The number of cells reported to base station 10 may be the number of NR serving cells that can be used for acquiring the timing reference information and/or the number of LTE serving cells that can be used for acquiring the timing reference information. Alternatively, the number of cells reported to base station 10 may be the total number of NR serving cells and LTE serving cells that can be used for acquiring the timing reference information. Additionally, the number of the cells reported may be defined as a number that does not exceed the number of serving cells to which terminal 20 can simultaneously connects in CA and/or DC.

Further, terminal 20 may notify base station 10 of a type of signaling used for acquiring the timing reference information for the set of cells that has been configured. The type of signaling may include, for example, broadcast, multicast, and unicast.

For example, signaling that indicates a capability of terminal 20 (UE Capability Signaling) may be used for the notification to base station 10.

Note that in the configuration where terminal 20 acquires the timing reference information transmitted from two or more cells, a clock acquired from the timing reference information may be handled differently according to a service provided.

In a service provided by using one synchronizing clock, for example, terminal 20 does not have to assume that absolute times (e.g., GPS) acquired from the timing reference information transmitted by different cells are different from each other. For example, terminal 20 does not assume that absolute time #1 is acquired from cell #1 and absolute time #2, which is different from absolute time #1, is acquired from cell #2. Note that the service provided by using one synchronizing clock may be referred to as a single clock domain service.

In a service provided by using a plurality of synchronizing clocks, for example, terminal 20 may allow that absolute times (e.g., GPS) or relative times (e.g., a local time) acquired from the timing reference information transmitted by different cells are different from each other. Note that the service provided by using a plurality of synchronizing clocks may be referred to as a multiple clock domain service.

Note that in the service provided by using a plurality of synchronizing clocks, which synchronizing clock is provided from a cell (or, CC or Bandwidth Part (BWP)) may be configured. Information on the configuration may be notified by higher layer signaling or physical layer signaling.

As described above, in the present embodiment, terminal 20 includes: control section 203 that identifies one or more cells among a plurality of candidate cells where reference information (e.g., timing reference information) on reference time is receivable; and reception section 201 that receives the reference information in the identified cells. With this configuration, terminal 20 can appropriately acquire the information (e.g., timing reference information) on the reference time in a system where CA/DC is applied, thereby easily securing the synchronization.

Note that the expression of "acquire(s) timing reference information" described above may correspond to receiving a signal including the timing reference information and detecting (or extracting) the information from the received signal.

In addition, the term "cell" or "serving cell" described above may be replaced with a carrier, a component carrier (CC), BWP, or the like.

### (Hardware Configuration)

Note that the block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

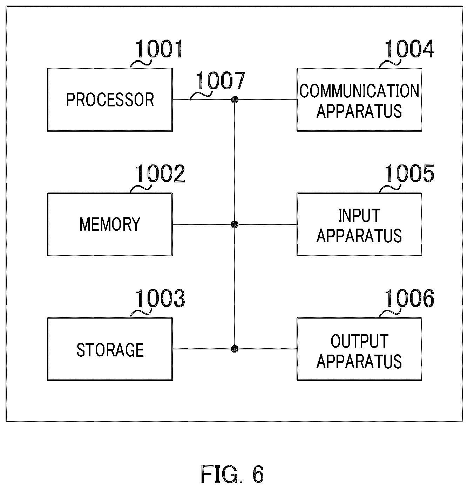

For example, the base station, the terminal, and the like according to an embodiment of the present disclosure may function as a computer that executes processing of a wireless communication method of the present disclosure. FIG. 6 illustrates an exemplary hardware configuration of the base station and the terminal according to one embodiment of the present disclosure. Physically, base station 10 and terminal 20 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of base station 10 and of terminal 20 may include one apparatus or a plurality of apparatuses illustrated in the drawings or may not include part of the apparatuses.

The functions of base station 10 and terminal 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103, control section 203 and the like as described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operations described in the above embodiments is used. For example, control section 103 of base station 10 or control section 203 of terminal 20 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, transmission section 202, and the like as described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, base station 10 and terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### (Notification of Information and Signaling)

The notification of information is not limited to the aspects or embodiments described in the present disclosure, and the information may be notified by another method. For example, the notification of information may be carried out by one or a combination of physical layer signaling (for example, Downlink Control Information (DCI), Uplink Control Information (UCI)), higher layer signaling (for example, Radio Resource Control (RRC) signaling, Medium Access Control (MAC) signaling, broadcast information (Master Information Block (MIB), System Information Block (SIB))), and other signals. The RRC signaling may be called as an RRC message and may be, for example, an RRC connection setup message, an RRC connection reconfiguration message, or the like.

### (Applied System)

The aspects and embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### (Processing Procedure and the like)

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### (Operation of Base Station)

Specific operations which are described in the present disclosure as being performed by the base station may sometimes be performed by an upper node depending on the situation. Various operations performed for communication with a user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### (Direction of Input and Output)

The information and the like (see "Information and Signals") can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### (Information and Signals)

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called as a carrier frequency, a cell, a frequency carrier, or the like.

### ("System" and "Network")

The terms "system" and "network" used in the present disclosure can be interchangeably used.

### (Names of Parameters and Channels)

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the formulas and the like using the parameters may be different from the ones explicitly disclosed in the present disclosure. Various channels (for example, PUCCH and PDCCH) and information elements can be identified by any suitable names, and various names assigned to these various channels and information elements are not limitative in any respect.

### (Base Station (Radio Base Station))

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called as a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### (Terminal)

The terms "Mobile Station (MS)," "user terminal," "User Equipment (UE)," and "terminal" may be used interchangeably in the present disclosure.

The mobile station may be called, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### (Base Station/Mobile Station)

At least one of the base station and the mobile station may be called as a transmission apparatus, a reception apparatus, a communication apparatus, or the like. Note that at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipment (such communication may, e.g., be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### (Meaning and Interpretation of Terms)

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

The reference signal can also be abbreviated as an RS and may also be called as a pilot depending on the applied standard.

The description "based on" used in the present disclosure does not mean "based only on," unless otherwise specified. In other words, the description "based on" means both of "based only on" and "based at least on."

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

The "section" in the configuration of each apparatus may be replaced with "means," "circuit," "device," or the like.

In a case where terms "include," "including," and their modifications are used in the present disclosure, these terms are intended to be inclusive like the term "comprising." Further, the term "or" used in the present disclosure is not intended to be an exclusive or.

The radio frame may be constituted by one frame or a plurality of frames in the time domain. The one frame or each of the plurality of frames may be called as a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, a Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol(s), Single Carrier-Frequency Division Multiple Access (SC-FDMA) symbol(s), or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or PUSCH) that is transmitted in the time unit that is greater than the mini-slot may be referred to as a PDSCH (or PUSCH) mapping type A. The PDSCH (or PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called as a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that a unit that represents the TTI may be referred to as a slot, a mini-slot, or the like instead of a subframe.

Here, the TTI, for example, refers to a minimum time unit for scheduling in wireless communication. For example, in an LTE system, the base station performs scheduling for allocating a radio resource (a frequency bandwidth, a transmit power, and the like that are usable in each user equipment) on the basis of TTI to each user equipment. Note that, the definition of TTI is not limited to this.

The TTI may be a time unit for transmitting a channel-coded data packet (a transport block), a code block, or a codeword, or may be a unit for processing such as scheduling and link adaptation. Note that when the TTI is assigned, a time section (for example, the number of symbols) to which the transport block, the code block, the codeword, or the like is actually mapped may be shorter than the TTI.

Note that in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with a TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for a certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP Note that "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included in the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

In a case where articles, such as "a," "an," and "the" in English, for example, are added in the present disclosure by translation, nouns following these articles may have the same meaning as used in the plural.

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### (Variations and the like of Aspects)

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### Industrial Applicability

One aspect of the present disclosure is useful for mobile communication systems.

### Reference Signs List

10 Base station
20 Terminal
101, 202 Transmission section
102, 201 Reception section
103, 203 Control section

## Claims

1. A terminal, comprising:
a control section that identifies one or more cells among a plurality of candidate cells where reference information on reference time is receivable; and
a reception section that receives the reference information in the identified cells.

2. The terminal according to claim 1, wherein
the plurality of candidate cells are configured to the terminal.

3. The terminal according to claim 1, wherein
the identified cells are any of primary cells, secondary cells, or primary secondary cells.

4. The terminal according to claim 1, wherein
the reference information is included in a system information block when the identified cells include a primary cell.

5. The terminal according to claim 1, wherein
the reference information is included in any of a system information block, a multicast signal, or a unicast signal when the identified cells do not include a primary cell.

6. The terminal according to claim 1, wherein
the control section determines information indicating a number of cells from which the reception section is allowed to receive the reference information, and controls transmission of the information indicating the number of cells.

7. A communication method, comprising:
identifying one or more cells among a plurality of candidate cells where reference information on reference time is receivable; and
receiving the reference information in the identified cells.
